# EUROPEAN PATENT APPLICATION

(11) **EP 1 503 120 A1**
(43) Date of publication of application: **02.02.2005**
(21) Application number: 04103380.4
(22) Date of filing: 15.07.2004
(51) Int. Cl.: F16K 17/04

(54) **Pressure switch with angularly adjustable safety valve**

(30) Priority: 31.07.2003 IT MI20031571
(71) Applicant: Ma-Ter S.r.l., 20060 Pessano Con Bornago, (MI) (IT)
(72) Inventor: Omati, Marco Gerolamo, I-20060 Pessano con Bornago (MI) (IT); Omati, Ennio, I-20060 Pessano con Bornago (MI) (IT)
(74) Representative: Mittler, Enrico

(57) **Abstract**

A device is described comprising a pressure switch (1) made up of a main body (2) and of a support tang (3), and a safety valve (4) having one coupling end (16) shaped in such a way as to embrace the tang (3) of said pressure switch (1), with the possibility to rotate by 360° around the axis of the tang (3) of the same pressure switch (1). Ring-shaped tightness means (14) are provided which are interposed between the valve (4) and the tang (3) of the pressure switch (1) in such a way as to allow the water tightness in every angular position of the valve (4).

## Description

The present invention concerns a pressure switch with angularly adjustable safety valve.

Usually pressure switches are made without safety valves which however become indispensable in order to guarantee the discharge of possible overpressure that could damage the systems.

Safety valves are therefore purchased separately and subsequently inserted in the environment under control.

Said insertion in addition is not always easy in virtue of the limited space that many machinery reserves to accessory devices such as valves and pressure switches. At the moment of the assembly problems with space can arise that sometimes even lead to change the accessory.

Object of the present invention is to provide a device that comprises a pressure switch and an angularly adjustable safety valve, in order to solve the problems of the known technique which have been pointed out above.

According to the invention such object is attained with a device characterised in that it comprises a pressure switch made up of a main body and a support tang, and a safety valve having one coupling end shaped in such a way as to embrace the tang of said pressure switch, with the possibility to rotate by 360° around the axis of the tang of the same pressure switch, there being provided ring-like tightening means interposed between the valve and the tang of the pressure switch so as to allow the water tightness in every angular position of the valve.

A single device is thus obtained, comprising a pressure switch and an angularly adjustable safety valve, which prevents the aforesaid problems of the known technique.

These and other characteristics of the present invention will become evident from the following detailed description of an embodiment thereof that is illustrated as a non limiting example in the enclosed drawings, in which:

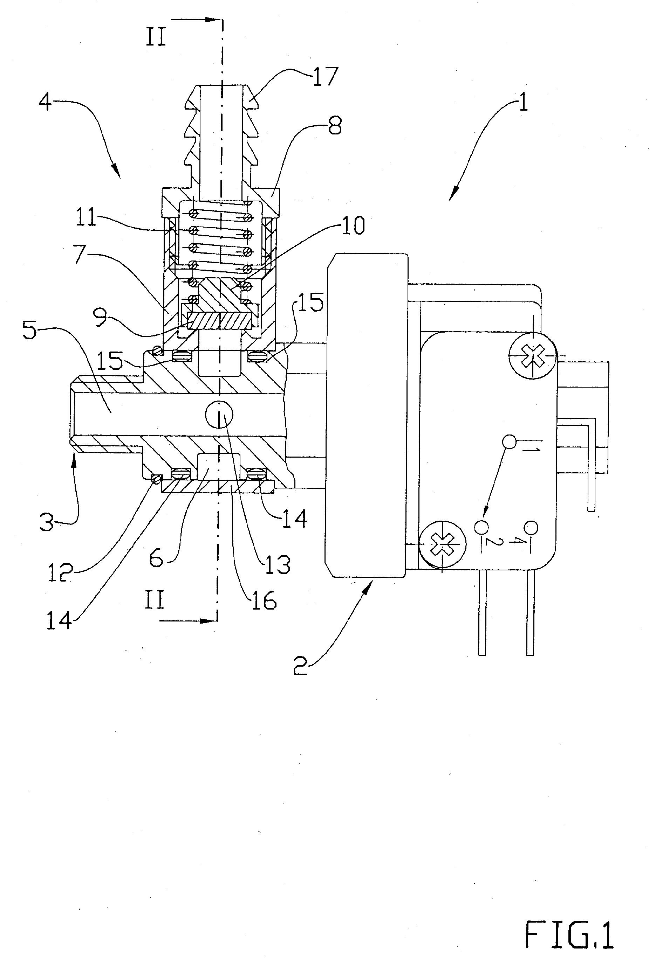

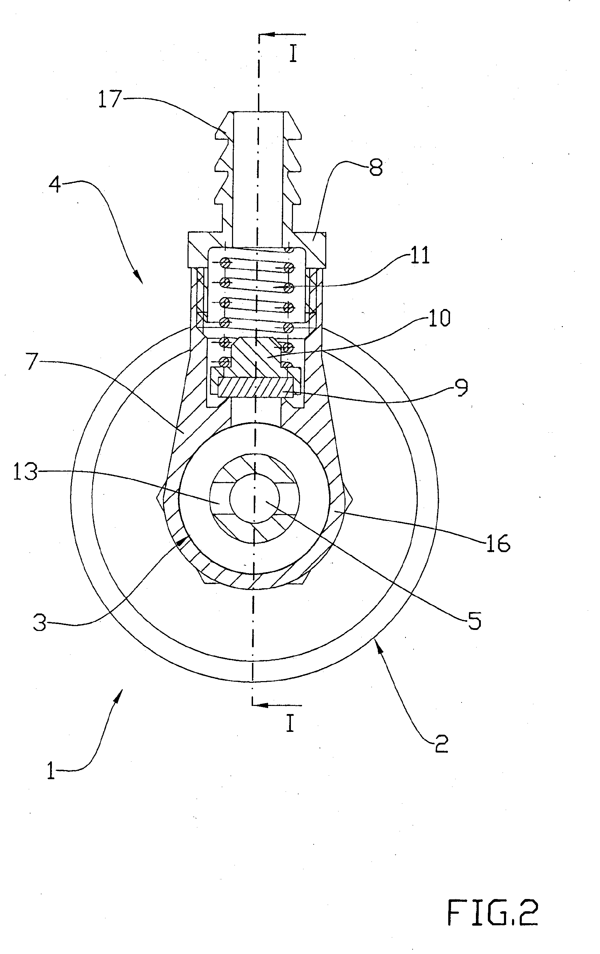

Figure 1 shows a lateral view of the device according to the present invention, partially sectioned according to line I-I in Figure 2;
Figure 2 shows a section according to line II-II in Figure 1.

A pressure switch 1, as for example a maximum pressure switch (rendered in the drawing) or of differential type as the one described in the Italian patent application MI2002A002761 of 24.12.2002, comprises a main body 2 and a support tang 3 around which a safety valve 4 is fastened.

Said support 3 is provided with an axial channel 5 and with a round channel 6 connected with each other by means of a diametrical hole 13.

The safety valve 4 is made up of a hollow body 7, provided with a coupling end 16 which embraces the tang 3 and communicates with the round channel 6, of a pierced plug 8 threadingly connected with the hollow body 7 and provided with a "resca" connection end 17 and of an obturator 10 with packing 9 which is biased into closing position by a compression spring 11 having one end reacting against the plug 8.

A ring 12 revolvingly holds in position the end 16 of the safety valve 4 around the tang 3 of the pressure switch 1.

The rotational motion of the valve 4 around the tang 3 for the desired angular orientation of the same valve takes place in conditions of water tightness in virtue of the presence of tightness O-Rings 14 positioned in suitable round grooves 15 obtained on the external part of the same tang 3.

As for what concerns the operation of the device according to the present invention, normally the safety valve 4 is in closing position, that is the pressure present in the channel 5 of the tang 3, which is the same one that insists on the packing 9, is not such as to additionally compress the spring 11 and therefore to cause the opening of the same valve.

Said spring 11 is calibrated in such a way as to allow the opening of the valve 4 for a determined pressure value lower than the one pre-established for the safety of the system.

## Claims

1. Device **characterised in that** it comprises a pressure switch (1) made up of a main body (2) and of a support tang (3), and a safety valve (4) having one coupling end (16) shaped in such a way as to embrace the tang (3) of said pressure switch (1), with the possibility to rotate by 360° around the axis of the tang (3) of the same pressure switch (1), there being provided ring-shaped tightness means (14) interposed between the valve (4) and the tang (3) of the pressure switch (1) so as to allow the water tightness in every angular position of the valve (4).

2. Device according to claim 1, **characterised in that** said safety valve (4) is made up of a hollow body (7) provided with said coupling end (16), with a pierced plug (8) fastened to said hollow body (7) and provided with one end (17) for fastening to the environment under control and with a obturator (10) with a packing (9) thrust in closing position by a compression spring (11).

3. Device according to claim 1, **characterised in that** said tang (3) is provided with an axial channel (5) and with a round channel (6) connected with each other through a diametrical hole (13).

4. Device according to claim 1, **characterised in that** said ring-shaped tightness means (14) are made up of O-Rings (14) placed around the tang (3) at the two sides of said coupling end (16) of the valve (4).

5. Device according to claim 1, **characterised in that** said valve (4) is held axially in position by a ring (12).
